# EUROPEAN PATENT SPECIFICATION

(11) **EP 4 357 715 B1**
(45) Date of publication and mention of the grant of the patent: **26.11.2025**
(21) Application number: 23204490.9
(22) Date of filing: 18.10.2023
(51) Int. Cl.: F28D 7/16, B21D 53/06, F28D 9/00, F28F 3/10, F28F 1/02, B21D 5/02, B21D 19/00, B21D 51/06, B21D 53/04

(54) **PLATE-TYPE HEAT EXCHANGER AND METHOD FOR MANUFACTURING THE SAME**
PLATTENWÄRMETAUSCHER UND VERFAHREN ZU DESSEN HERSTELLUNG
ECHANGEUR DE CHALEUR À PLAQUES ET SON PROCÉDÉ DE FABRICATION

(30) Priority: 20.10.2022 KR 20220135459; 23.08.2023 KR 20230110351
(43) Date of publication of application: 24.04.2024
(73) Proprietor: SHINHAN ECOONEX CORPORATION, Incheon 21699 (KR)
(72) Inventor: CHO, Mun-Jae, 04983 Seoul (KR)
(74) Representative: Walaski, Jan Filip

(56) References cited:
- WO-A2-2011/074963
- KR-B1- 100 865 115
- US-A1- 2010 006 274
- US-A1- 2011 017 436

## Description

### [Technical Field]

The present invention relates to a plate-type heat exchanger and a method of manufacturing the same, and more specifically to a plate-type heat exchanger in which the number of flange portions that are formed to be bent and in contact with each other at the edge of a heat conduction plate is reduced to increase the heat transfer area per unit area of the heat conduction plate in contact with the high-temperature exhaust gas; and the resistance generated when the area where the heat conduction plates are welded to each other comes into contact with the high-temperature exhaust gas flowing inward can be reduced, and a method of manufacturing the same.

### [Background Art]

In general, a heat exchanger is a fluid-to-fluid type heat recovery device that recovers heat contained in exhaust gas discharged to the outside from industrial facilities and air-conditioning facilities and supplies it to production facilities or indoors.

This heat exchanger is classified into a plate-type heat exchanger, a heat pipe-type heat exchanger, and a disk-type heat exchanger, etc., depending on the type of a heat exchange module, which is a core part provided therein.

The plate-type heat exchanger allows heat transfer (heat exchange) between a high-temperature gas, such as waste heat, and a low-temperature gas, such as gas in the atmosphere, without physical contact with each other.

In such a plate-type heat exchanger, a plurality of plate-shaped heat transfer plates are arranged to be parallel to each other and overlap at predetermined intervals; a space between the respective heat transfer plates becomes a flow path through which fluid flows in one direction; and high-temperature gas and low-temperature gas are supplied alternately to each flow path for each heat transfer plate, allowing heat exchange (heat transfer) to occur through each heat transfer plate, thereby recovering heat.

### [Prior Art Literature]

### [Patent Documents]

(Patent Document 1) Korean Registered Patent No. 10-0909490 B1
(Patent Document 2) Korean Registered Patent No. 10-0865115 B1
US-A-201000627 discloses a plate-type heat exchanger according to the preamble of claim 1.

### [Disclosure]

### [Technical Problem]

An object of the present invention is to provide a plate-type heat exchanger in which the number of flange portions that are formed to be bent and in contact with each other at the edge of a heat conduction plate is reduced to increase the heat transfer area per unit area of the heat conduction plate in contact with exhaust gas; and the thermal resistance generated when the area where the heat conduction plates are welded to each other comes into contact with the high-temperature exhaust gas flowing inward can be reduced, and a method of manufacturing the same.

The technical objects to be achieved in the present invention are not limited to the technical object mentioned above, and other technical objects not mentioned will be clearly understood by those skilled in the art from the following description.

### [Technical Solution]

According to one aspect of the present invention, provided is a plate-type heat exchanger according to claim 1.

Here, the bending portion may include a first bending portion having an arc-shaped cross-section, which connects the first heat transfer portion and the second heat transfer portion to each other, and a second bending portion having a plate shape, which connects the flange portions formed at both side edges of the first heat transfer portion and the other flange portions formed at both side edge of the second heat transfer portion.

The heat transfer shell may include a pair of heat conduction plates in which the heat transfer areas of the first heat transfer portion and the second heat transfer portion are different from each other; and a plurality of spacing bars that maintain a constant gap formed between the first and second heat transfer portions having different heat transfer areas and facing each other.

The plurality of spacing bars may include a first spacing bar in which one side thereof is welded and connected to a joint area where the respective ends of the first and second heat transfer portions having different heat transfer areas are welded and connected in contact with each other, and the other side is welded and connected to a heat transfer portion corresponding to the joint portion; and a second spacing bar in which both sides thereof are welded and connected in contact with the heat transfer portions facing each other.

In addition, the heat transfer shell may include a pair of heat conduction plates in which the heat transfer areas of the first heat transfer portion and the second heat transfer portion are the same; and a plurality of spacing bars that maintain a constant gap formed between the first and second heat transfer portions having the same heat transfer areas and facing each other.

The plurality of spacing bars may include a first spacing bar in which both sides thereof are welded and connected to both sides of the joint area where the respective ends of the first and second heat transfer portions having the same heat transfer area are welded and connected in contact with each other; and a second spacing bar in which both sides thereof are welded and connected in contact with the first and second heat transfer portions facing each other.

The heat exchanger may include a plurality of vertical frames located at each corner of the heat transfer assembly, an upper frame fixed to each upper end of the plurality of vertical frames so that its lower surface is in contact with the uppermost heat transfer shell among the plurality of stacked heat transfer shells, a lower frame fixed to each lower end of the plurality of vertical frames so that its upper surface is in contact with the lowest heat transfer shell among the plurality of stacked heat transfer shells, and a plurality of stopper bars that are fixed to one side of each of the plurality of vertical frames corresponding to the flange portion of the heat conduction plate to come into contact with the end of the flange portion.

The heat exchanger may include at least one sealing material which is interposed between each other side of the plurality of vertical frames corresponding to the second bending portion formed at both ends of the bending portion, and the second bending portion formed in a flat plate shape.

According to another aspect of the present invention, provided is a method for manufacturing a plate-type heat exchanger according to claim 9.

In the step of preparing the heat conduction plate, a mold is used, wherein the mold includes a lower mold body including a first lower mold and a pair of second lower molds each having a bottom surface respectively disposed at both sides of the first lower mold, and an upper mold body including a first upper mold and a pair of second upper molds respectively disposed at both sides of the first upper mold; when the upper mold body is lowered directly downward by an actuator to pressurize the plate and then return upward in a state where the plate having the flange portions formed at both side edges by first bending is placed on the first and second lower molds of the lower mold body, the first and second lower molds of the lower mold body can be joined to the first and second upper molds of the upper mold body with the plate between them and secondarily bend the plate to form the bending portion.

The first lower mold may include a first concave portion with a bottom surface recessed downward, the second lower mold may include a second concave portion with a flat bottom surface; and the first upper mold may include a first convex portion whose lower end corresponding to the first concave portion protrudes convexly downward, and the second upper mold may include a second convex portion whose lower end corresponding to the second concave portion protrudes flatly.

In this case, a first bending portion having an arc-shaped cross-section may be bent and formed by the first concave portion and the first convex portion, while a second bending portion having a plate shape may be bent and formed by the second concave portion and the second convex portion, thereby bending and forming the bending portion in which the second bending portion is continuously formed at both sides of the first bending portion.

In the step of forming the heat transfer shell, the heat transfer shell may include a pair of heat conduction plates in which the heat transfer area of the first heat transfer portion is different from that of the second heat transfer portion, one side of a first spacing bar may be welded and connected to a joint area where the respective ends of the first and second heat transfer portions having different heat transfer areas are welded and connected in contact with each other; the other side of the first spacing bar may be welded and connected to a relatively wide heat transfer portion; and both sides of a second spacing bar may be welded and connected in contact with the heat transfer portions facing each other.

In the step of forming the heat transfer shell, the heat transfer shell may include a pair of heat conduction plates in which the heat transfer area of the first heat transfer portion is the same as that of the second heat transfer portion, both sides of a first spacing bar may be welded and connected to both side joint areas where the respective ends of the first and second heat transfer portions having the same heat transfer areas are welded and connected in contact with each other; and both sides of a second spacing bar may be welded and connected in contact with the heat transfer portions facing each other.

### [Advantageous Effects]

According to the plate-type heat exchanger of the present invention having the above configuration, the processing cost of the heat conduction plate can be reduced by reducing the number of flange portions that bent and formed at the edge of the heat conduction plate.

In addition, the heat transfer area per unit area of the heat conduction plate in contact with a high-temperature exhaust gas can be increased; and the thermal resistance generated when the area where the heat conduction plates are welded and connected to each other comes into contact with a high-temperature exhaust gas flowing inward can be reduced, thereby increasing the heat exchange efficiency of the plate-type heat exchanger and extending the service life thereof.

It should be understood that the effects of the present invention are not limited to the above effects, and include all effects that can be inferred from the configuration of the invention described in the detailed description or claims of the present invention.

### [Description of Drawings]

FIG. 1 is a perspective view showing a heat conduction plate of a plate-type heat exchanger according to an embodiment of the present invention, in which a flange portion is formed to be bent.
FIG. 2 is a perspective view showing a heat conduction plate of a plate-type heat exchanger according to an embodiment of the present invention, in which a bending portion is formed to be bent.
FIG. 3 is a perspective view showing a heat conduction plate of a plate-type heat exchanger according to an embodiment of the present invention, which is provided with a spacer bar.
FIG. 4 is a perspective view showing a heat transfer shell formed by welding the heat conduction plates of a plate-type heat exchanger according to an embodiment of the present invention.
FIG. 5A is a cross-sectional view taken along line 4a-4a in FIG. 4.
FIG. 5B is a cross-sectional view taken along line 4b-4b in FIG. 4.
FIG. 6 is a perspective view showing another heat transfer shell formed in a plate-type heat exchanger according to an embodiment of the present invention.
FIG. 7 is a perspective view showing a heat transfer assembly of a plate-type heat exchanger according to an embodiment of the present invention.
FIG. 8 is a perspective view showing a plate-type heat exchanger according to an embodiment of the present invention.
FIG. 9 is a plan view showing a plate-type heat exchanger according to an embodiment of the present invention.
FIGS. 10A to 10E are process diagrams showing a process of bending and forming a heat conduction plate in a plate-type heat exchanger according to an embodiment of the present invention.
FIG. 11 is a schematic diagram showing a state in which a part of a plate-type heat exchanger according to the present invention and a part of a conventional plate-type heat exchanger are in contact with external air.

### [Best Modes of the Invention]

Hereinafter, with reference to the accompanying drawings, embodiments of the present invention will be described in detail so as to be easily implemented by one of ordinary skill in the art to which the present invention pertains. The present invention may be embodied in a variety of forms and is not be limited to the embodiments described herein. In order to clearly describe the present invention, parts irrelevant to the description are omitted from the drawings; and throughout the specification, same or similar components are referred to as like reference numerals.

The words and terms used in the specification and claims of the present application are not to be construed as being limited to their ordinary or dictionary meanings, but should be interpreted as meanings and concepts consistent with the technical spirit of the present invention, based on the principle that the inventor may define terms and concepts to best describe his invention.

Therefore, the configurations shown in the embodiments described in the specification and the drawings correspond to preferred embodiments of the present invention, and do not represent the entire technical ideas of the present invention, so the configurations may have various equivalents and variations to replace them at the time of filing the present invention.

In the specification, terms such as "comprise" or "have" are intended to explain that a feature, number, step, operation, component, part or combination thereof described in the specification is present, but should not be construed to preclude the possibility of the presence or addition of one or more other features, numbers, steps, operations, components, parts or combinations thereof.

When a component is said to be "before", "after", "above" or "below" another component, it includes a case in which the component is placed "before", "after", "above" or "below" another component so as to be in direct contact with each other, as well as a case where any additional component is disposed between the two components, unless there are special circumstances. In addition, when a component is said to be "connected" to another component, it includes cases where they are not only directly connected to each other but also indirectly connected to each other, unless there are special circumstances.

Hereinafter, a plate-type heat exchanger according to an embodiment of the present invention will be described with reference to the drawings.

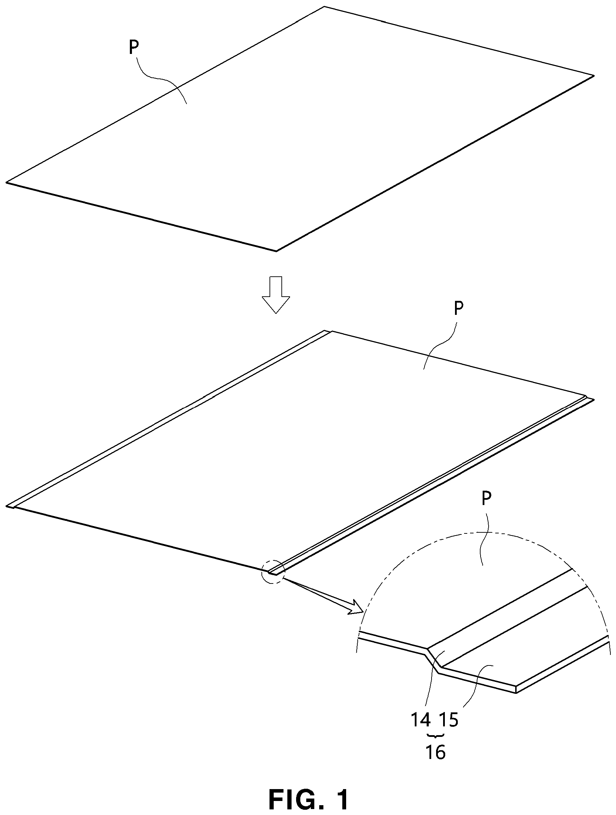

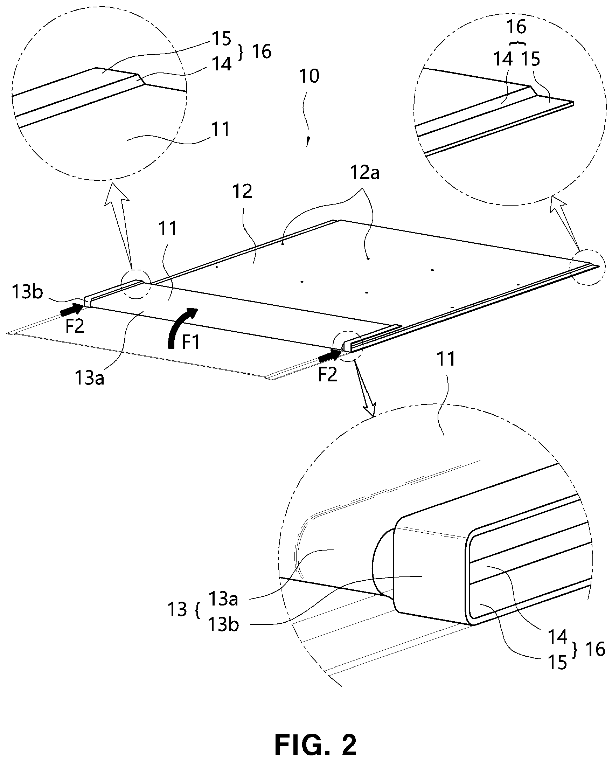

FIG. 1 is a perspective view showing a heat conduction plate of a plate-type heat exchanger according to an embodiment of the present invention, in which a bending portion is formed to be bent, and FIG. 2 is a perspective view showing a heat conduction plate of a plate-type heat exchanger according to an embodiment of the present invention, in which a bending portion is formed to be bent.

The plate-type heat exchanger 100 according to a preferred embodiment of the present invention includes a heat transfer assembly 30 comprising a plurality of heat transfer shells 20, wherein each of the plurality of heat transfer shells 20 comprises a pair of heat conduction plates 10.

As shown in FIG. 1, one of the pair of heat conduction plates 10 can be provided by preparing a plate P having an approximately square plate shape, and then first bending both side edges of the plate outward using a mold (not shown) to form a pair of flange portions 16.

As shown in FIG. 2, this heat conduction plate 10 includes a first heat transfer portion 11 and a second heat transfer portion 12 facing each other at a certain distance by a bending portion 13 formed in the middle of the length.

The flange portion 16 may include an inclined surface 14 inclined at a certain angle from both side edges of the first and second heat transfer portions, and a planar joint surface 15 extending horizontally outward from the end of the inclined surface and having a different height from the first and second planar heat transfer portions due to the inclined surface 14.

The plate P, which has the flange portions 16 bent outward at both side edges, may be secondarily bent in the middle of the length by the upper and lower mold bodies 40 and 50 of another mold, which will be described later, to form an approximately U-shaped bending portion 13, thereby forming a first heat transfer portion 11 and a second heat transfer portion 12 that are parallel while facing each other at a certain distance.

The bending portion 13 may include a first bending portion 13a having a substantially arc-shaped cross-section, which connects the first heat transfer portion 11 and the second heat transfer portion 12 to each other and is in contact with a second fluid (G) to be described later, and a second bending portion 13b having a substantially plate shape, which connects the flange portion 16 formed at both side edges of the first heat transfer portion 11 and the other flange portions formed at both side edge of the second heat transfer portion 12.

In this case, a curved portion connecting the arc-shaped cross-section and the plate-shaped cross-section may be formed between the first bending portion having the arc-shaped cross-section and the second bending portion having the plate-shaped cross-section.

In addition, the gap between the flange portions 16 that are bent and formed at both side edges of each of the first and second heat transfer portions 11 and 12 and face each other is formed to be relatively wider than the gap between the first and second heat transfer portions 11 and 12 facing each other, whereby the inlet and outlet of a first passage (S1), which is an internal passage of the heat transfer shell 20, can be secured wider, thereby allowing the inflow and discharge of a first fluid passing in one direction through the first passage during heat exchange more smoothly.

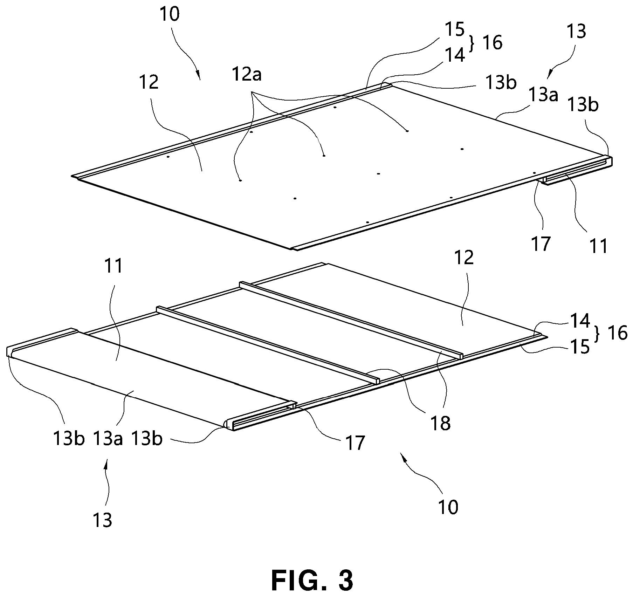

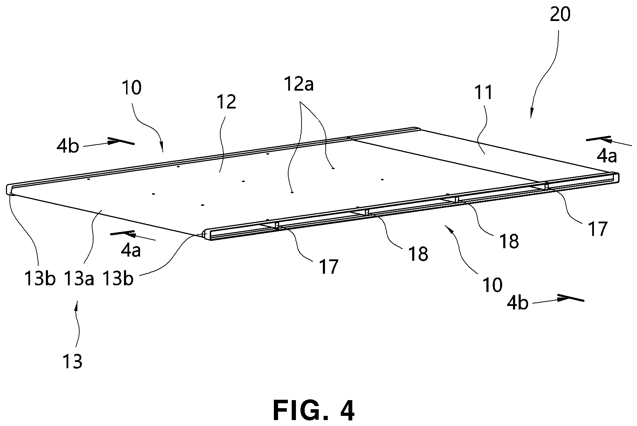

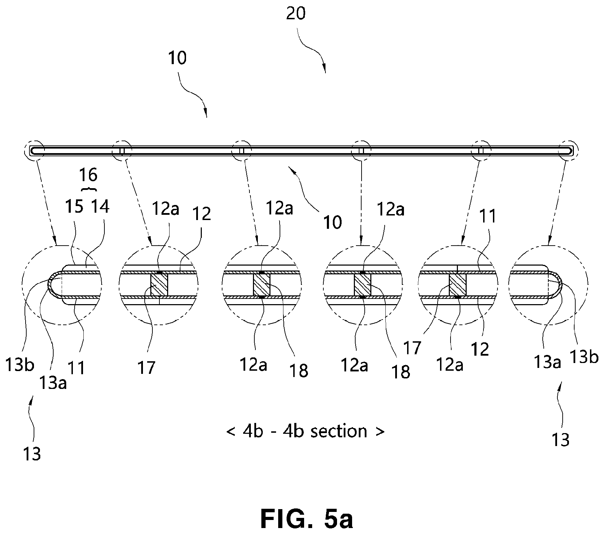

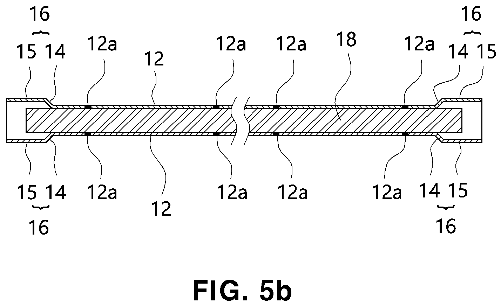

FIG. 3 is a perspective view showing a heat conduction plate of a plate-type heat exchanger according to an embodiment of the present invention, which is provided with a spacer bar; FIG. 4 is a perspective view showing a heat transfer shell formed by welding the heat conduction plates of a plate-type heat exchanger according to an embodiment of the present invention; FIG. 5A is a cross-sectional view taken along line 4a-4a in FIG. 4; and FIG. 5B is a cross-sectional view taken along line 4b-4b in FIG. 4.

As shown in FIGS. 3 and 4, the heat transfer shell 20 includes the first passage (S1) formed by welding an end of the first heat transfer portion 11 of the heat conduction plate 10 located at the upper side in the drawing and an end of the second heat transfer portion 12 of the other heat conduction plate 10 located at the lower side of the drawing in contact with each other, and by welding an end of the second heat transfer portion 12 of the heat conduction plate 10 located at the upper side in the drawing and an end of the first heat transfer portion 11 of the other heat conduction plate 10 located on the lower side of the drawing in contact with each other, wherein the first passage (S1) allows a first fluid (A), a low-temperature gas such as air flowing in from the outside, to pass in one direction.

In addition, the heat transfer shell 20 may have a heat transfer area of one of the first and second heat transfer portions 11 and 12 that is relatively smaller than that of the other heat transfer portion, and thus may include a pair of heat conduction plates in which the first heat transfer portion 11 and the second heat transfer portion 12 provided in one heat conduction plate have different heat transfer areas.

In this case, a pair of welded connection areas where the respective ends of the first and second heat transfer portions 11 and 12 having different heat transfer areas are welded in contact with each other may be positioned differently on both bending portions 13.

The pair of heat conduction plates 10 provided in the heat transfer shell 20 are shown and described as being provided so that the heat transfer area of the first heat transfer portion 11 is relatively smaller than that of the second heat transfer portion 12 as shown in FIGS. 3 and 4, but are not limited thereto, and the heat transfer area of the first heat transfer portion 11 may be relatively larger than that of the second heat transfer portion 12.

In addition, the heat transfer shell 20 may include a plurality of spacing bars 17 and 18 that maintain the gap formed between the first and second heat transfer portions of the heat conduction plate parallel to each other to be constant.

As shown in FIGS. 3, 4 and 5A and 5B, in case where the heat transfer areas of the first heat transfer portion 11 and the second heat transfer portion 12 in the pair of heat conduction plates 10 constituting the heat transfer shell 20 are different from each other, the plurality of spacing bars may include a first spacing bar 17 fixedly installed at a joint area where the respective ends of the first and second heat transfer portions having different heat transfer areas are welded in contact with each other, and a second spacing bar 18 fixedly installed between the heat transfer portions facing each other.

The first spacing bar 17 may be a bar member with an approximately square cross-section in which one side is simultaneously welded to a pair of joint areas, and the other side is welded through a weld hole 12a formed through the heat transfer portion having a relatively large heat transfer area, wherein the pair of joint areas are formed adjacent to the both side bending portions 13 of the heat transfer shell, respectively, by welding the respective ends of the first and second heat transfer portions provided in different heat conduction plates in contact with each other.

The second spacing bar 18 may be a bar member with an approximately square cross-section in which both sides are welded and connected in contact through another weld hole 12a formed through the heat transfer portions facing each other and having relatively large heat transfer areas among the first and second heat transfer portions provided in different heat conduction plates.

Preferably, the plurality of spacing bars including the first and second spacing bars 17 and 18 are arranged so that both ends are located at the inlet and outlet ends that are open at both sides of the heat transfer shell, respectively, and they are spaced apart at a certain distance so as not to impede the one-way flow of the first fluid (A) through the first passage (S1).

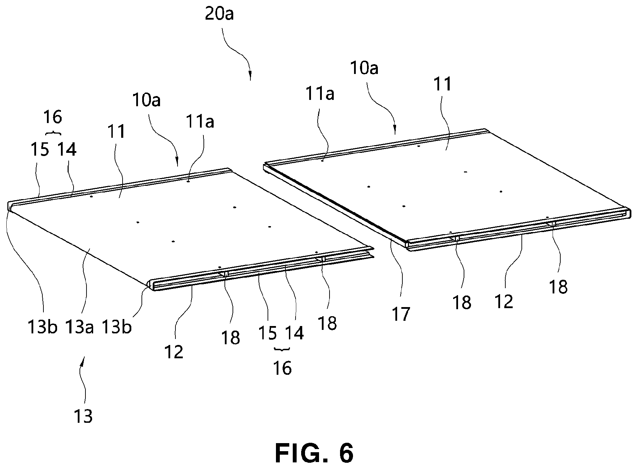

FIG. 6 is a perspective view showing another heat transfer shell formed in a plate-type heat exchanger according to an embodiment of the present invention.

The heat transfer shell 20 may include a pair of heat conduction plates 10 in which the heat transfer areas of the first heat transfer portion 11 and the second heat transfer portion 12 are the same, whereby a pair of welded connection areas, where the respective ends of the first and second heat transfer portions 11 and 12 having the same heat transfer area are welded in contact with each other, may face each other while being positioned on the same vertical line.

The pair of heat conduction plates 10 provided in the heat transfer shell 20 are shown and described as being provided so that the heat transfer areas of the first and second heat transfer portions 11 and 12 of one heat conduction plate 10 are same as that of the first and second heat transfer portions 11 and 12 of the other heat conduction plate as shown in FIG. 6, but are not limited thereto, and the first and second heat transfer portions 11 and 12 having the same heat transfer area in one heat conduction plate 10 and the first and second heat transfer portions 11 and 12 having the same heat transfer area in the other heat conduction plate 10 may have different sizes, and thus, the welded connection area located on the same vertical line may be located biased toward one of the pair of bending portions 13.

In addition, the heat transfer shell 20 may include a plurality of spacing bars 17 and 18 that maintain the gap formed between the first and second heat transfer portions of the heat conduction plate parallel to each other to be constant.

As shown in FIGS. 6, in case where the heat transfer areas of the first heat transfer portion 11 and the second heat transfer portion 12 in the pair of heat conduction plates 10 constituting the heat transfer shell 20 are the same, the plurality of spacing bars may include a first spacing bar 17 with both sides fixed to a pair of joint area where the respective ends of the first and second heat transfer portions having the same heat transfer area and being in contact with each other are welded in contact with each other, and a second spacing bar 18 that is fixedly installed by welding both sides through a weld hole formed through the heat transfer portion having the same heat transfer area and facing each other.

The first spacing bar 17 may be a bar member with a square cross-section in which both sides are simultaneously welded in contact with a pair of joint areas on the same vertical line, respectively, by welding the respective ends of the first and second heat transfer portions provided in different heat conduction plates in contact with each other.

The second spacing bar 18 may be a bar member with an approximately square cross-section in which both sides are welded and connected in contact through another weld hole 12a formed through the heat transfer portions facing each other for each different heat conduction plate.

Here, the weld hole 12a is shown and explained as being formed through each of the first heat transfer portion and the second heat transfer portion 12 in an approximately circular shape to expose one side of the spacing bar, but is not limited thereto, and may be formed in the form of a long hole to increase joint strength after being welded to the first and second heat transfer portions.

In addition, one side of the spacing bar corresponding to the joint portion, where the respective ends of the pair of heat conductive plates are welded in contact with each other, may be provided with a weld groove having a certain length that is formed to be recessed in the longitudinal direction so that the worker can easily check the welding position of the joint portion and increase the joint strength after welding.

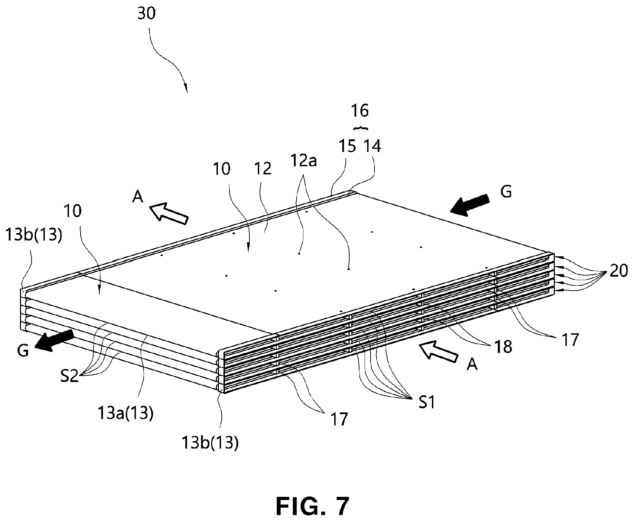

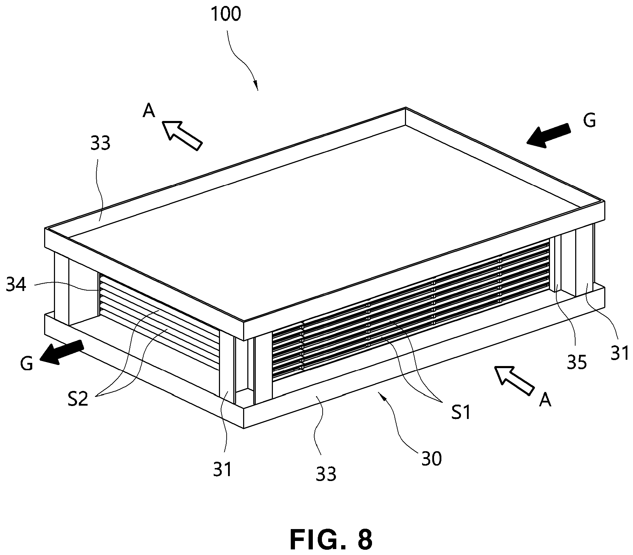

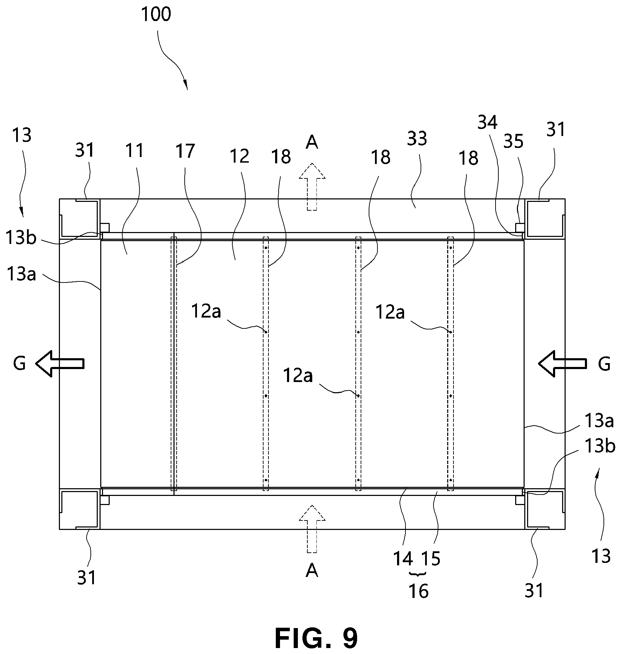

FIG. 7 is a perspective view showing a heat transfer assembly of a plate-type heat exchanger according to an embodiment of the present invention; FIG. 8 is a perspective view showing a plate-type heat exchanger according to an embodiment of the present invention; and FIG. 9 is a plan view showing a plate-type heat exchanger according to an embodiment of the present invention.

As shown in FIGS. 7, 8 and 9, the heat transfer assembly 30 comprises a roughly hexahedral rigid structure in which a plurality of heat transfer shells 20 are stacked in multiple layers so that the both side flange portions 16 of the heat conduction plate 10 provided in the heat transfer shell 20 and the both side flange portions 16 of the other heat conduction plate 10 provided in the other heat transfer shell 20 are welded in contact with each other, thereby forming a second passage (S2) between the adjacent heat transfer shells 20, wherein the second passage (S2) intersects the first passage at a right angle and allows a second fluid (G), which is a high-temperature gas such as exhaust gas having a relatively higher temperature than external air, to pass through it.

That is, when the heat transfer shells 20 are stacked in a vertical direction in the drawing, the joint surface 15 of the flange portion 16 orthogonal to the first passage of the heat transfer shell 20 may be integrally welded in surface-to-surface contact with another flange portion provided in another adjacent heat transfer shell.

Accordingly, the first passage (S1), which is an internal passage of the plurality of heat transfer shells 20, intersects at an approximately right angle with the second passage (S2) formed between the stacked heat transfer shells, whereby the first fluid (A), which is external air passing through the first passage (S1), is not mixed with the second fluid (G) passing in one direction through the second passage, and thus, the first fluid and the second fluid having different temperatures and passing through the heat transfer assembly 30 can exchange heat without physical contact.

The heat exchanger may include a plurality of vertical frames 31 located at each corner of the heat transfer assembly 30, an upper frame 32 fixed to each upper end of the plurality of vertical frames so that its lower surface is in contact with the uppermost heat transfer shell 20 among the plurality of stacked heat transfer shells, and a lower frame 33 fixed to each lower end of the plurality of vertical frames so that its upper surface is in contact with the lowest heat transfer shell 20 among the plurality of stacked heat transfer shells, and further include a plurality of stopper bars 35 that are fixed to one side of each of the plurality of vertical frames corresponding to the flange portion of the heat conduction plate to come into contact with the end of the flange portion.

The heat exchanger may include at least one sealing material 34 which is made of an elastic material such as Teflon or rubber, and is interposed between each other side of the plurality of vertical frames 31 corresponding to the second bending portion 13b formed at both ends of the bending portion 13, and the second bending portion formed in a flat plate shape.

Accordingly, the inlet and outlet of each first passage (S1) of the plurality of heat transfer shells 20 stacked in multiple layers can be aligned on the same vertical line by means of a stopper bar 35 that is fixedly installed on one side of the vertical frame 31 and comes into contact with the end of each flange portion provided in each heat conduction plate of the multi-layered heat transfer shell 20.

In addition, the second fluid (G), which flows into the inlet of the second passage (S2) formed between the stacked heat transfer shells and is discharged to the outlet, can be safely prevented from leaking to the outside through the gap formed between the plurality of vertical frames and the heat transfer assembly by means of the sealing material 34 interposed between the vertical frame 31 and the second bending portion 13b.

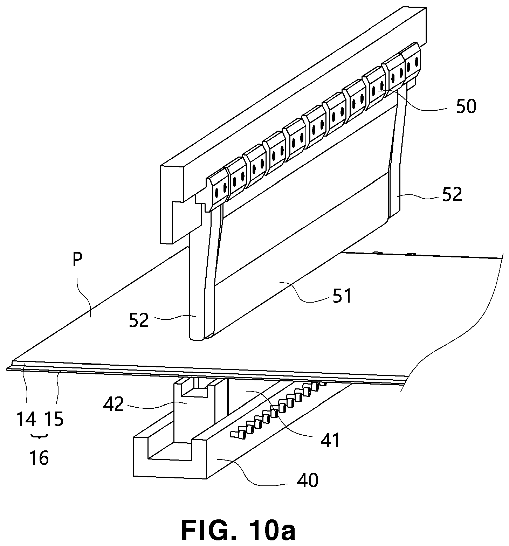

FIGS. 10A to 10E are process diagrams showing a process of bending and forming a heat conduction plate in a plate-type heat exchanger according to an embodiment of the present invention.

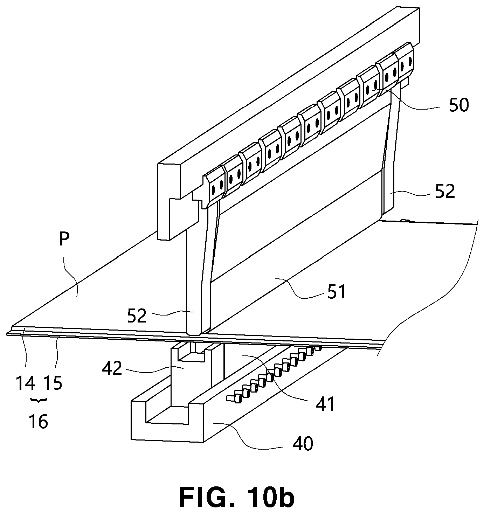

As shown in FIGS. 10A and 10B, a plate (P), which has the flange portions 16 formed at both side edges by first bending, is secondarily bent in a direction perpendicular to the flange portion using a mold to form the heat conduction plate 10 having the bending portion 13, wherein the mold includes a lower mold body 40 fixed to a base (not shown), and an upper mold body 50 that moves up and down with respect to the lower mold body by an actuator such as a hydraulic cylinder.

The lower mold body 40 may include a first lower mold 41 having a first concave portion with a bottom surface recessed downward, and a pair of second lower molds 42 each having a second concave portion with a flat bottom surface and disposed at both sides of the first lower mold.

The upper mold body 50 may include a first upper mold 51 having a first convex portion whose lower end corresponding to the first concave portion protrudes convexly downward, and a pair of second upper molds 52 each having a second convex portion whose lower end corresponding to the second concave portion protrudes flatly and disposed at both sides of the first upper mold.

The first and second lower molds 41 and 42 and the first and second upper molds 51 and 52 can be detachably fixed to the upper and lower mold bodies 40 and 50 by a plurality of fastening members so that they face each other one to one.

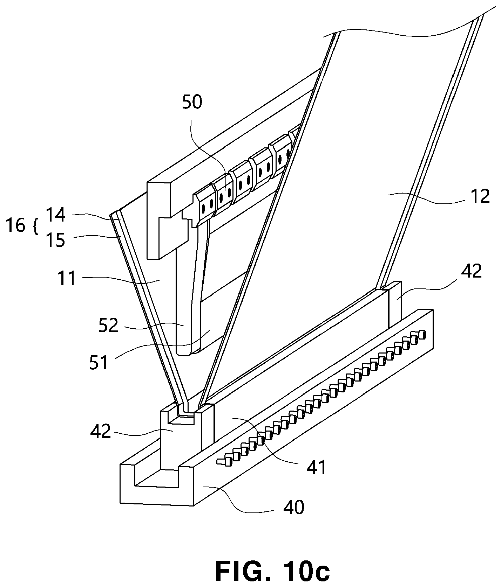

As shown in FIG. 10C, when the upper mold body is lowered directly downward by the actuator to pressurize the plate and then return upward in a state where the plate (P) having the flange portions 16 formed at both side edges by first bending is placed on the first and second lower molds of the lower mold body, the first and second lower molds of the lower mold body can be joined to the first and second upper molds of the upper mold body with the plate between them and secondarily bend the plate to form the bending portion 13.

In this case, a first bending portion 13a having an approximately arc-shaped cross-section can be bent and formed by the first concave portion and the first convex portion at the bent area of the plate where the first lower mold and the first upper mold are joined together, while a second bending portion 13b having an approximately plate shape can be bent and formed by the second concave portion and the second convex portion at the bent area of the plate where the second lower mold and the second upper mold are joined together, thereby bending and forming the bending portion 13 in which the planar second bending portion is continuously formed at both sides of the first bending portion 13a having an arc-shaped cross-section.

Then, after the upper mold body 50 returns upward, the bending portion 13 having the first and second bending portions is formed on the plate (P) and the heat conduction plate 10 remaining in the lower mold body is separated.

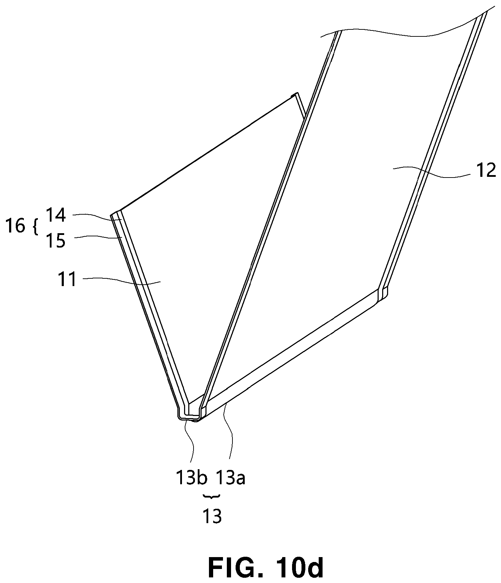

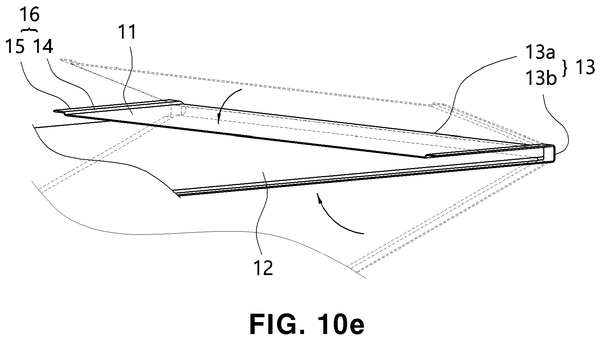

Finally, as shown in FIGS. 10d and 10e, the first heat transfer portion and the second heat transfer portion connected to each other with the bending portion 13 between them are spread in an approximately V-shape. Therefore, the heat conduction plate is placed on a workbench with a flat top surface, and then an external force is applied to deform the first heat transfer portion and the second heat transfer portion so that they are parallel to each other, thereby completing the bending and forming process for the heat conduction plate.

Meanwhile, when designing a plate-type heat exchanger, safety against corrosion must be considered as one of various design conditions.

For example, in a structure where heat exchange is performed, when the surface temperature of the heat conduction plate drops to the acid dew point or lower water dew point, condensation and thus corrosion occur in a specific area. If frequent corrosion occurs in a specific area exposed to the acid dew point, the replacement cycle for parts located in that area becomes frequent, the durability of the heat exchanger deteriorates, and the service life of the heat exchanger is shortened.

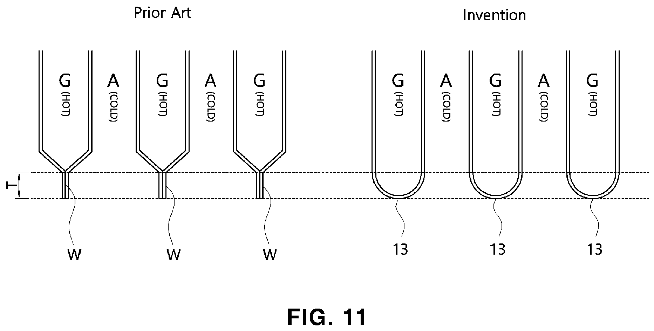

That is, in the case of a conventional plate-type heat exchanger having a welded flange portion (W) where the flange portions of a pair of heat conduction plates are connected by welding, as shown in FIG. 11, the heat of the second fluid (G), which is a high-temperature gas, is not transferred to the welded flange portion (W) located in the exposed area (T) that is in contact with room temperature outside air at the inlet where the first fluid (A) flows. Therefore, the temperature drops quickly due to contact with the room temperature outdoor air.

In this case, when the temperature of the heat transfer plate having the welded flange portion (W) located in the exposure area (T) decreases to approach the acid dew point generation temperature, the acid dew points occur at a high rate on the surface of the heat transfer plate located at the entrance of the first passage.

On the other hand, in the case of the plate-type heat exchanger of the present invention having an arc-shaped bending portion 13, as shown in FIG. 11, the heat of the second fluid (G), which is a high-temperature gas, is directly transferred to the bending portion 13 located in the exposed area (T), preventing a rapid temperature drop due to contact with the outside air at room temperature.

When the acid dew point generation temperature of the second fluid, which is a high-temperature gas, is approximately 110°C to 130°C, the temperature of the second fluid, which is a high-temperature gas discharged after losing heat through heat exchange with the first fluid, which is a low-temperature gas, can be stably maintained above the acid dew point generation temperature at the inlet of the first passage through which the first fluid flows. Therefore, it is possible to prevent the acid dew point from occurring on the surface of the heat transfer plate that is in direct contact with the second fluid, which is a high-temperature gas.

The temperature drop at the bending portion 13 of the plate-type heat exchanger of the present invention can be minimized while maintaining a significantly lower rate compared to the temperature drop at the welded flange portion (W) of the conventional plate-type heat exchanger. Therefore, the occurrence of the acid dew point, which causes corrosion, can be fundamentally prevented, thereby extending the service life of the plate-type heat exchanger and reducing maintenance costs caused by corrosion.

Although an embodiment of the present invention have been described, the scope of the present invention is not limited to the embodiment presented in the subject specification; and those skilled in the art who understands the scope of the present invention will be able to easily suggest other embodiments through addition, changes, elimination, and the like of elements without departing from the scope of the invention as defined in the appended claims.

### [Description of Reference Numerals and Symbols]

10: heat conduction plate
11: first heat transfer portion
12: second heat transfer portion
13: bending portion
13a: first bending portion
13b: second bending portion
17: first spacing bar
18: second spacing bar
20: heat transfer shell
30: heat transfer assembly
31: vertical frame
32: upper frame
33: lower frame
34: sealing material
40: lower mold body
50: upper mold body
S1: first passage
S2: second passage
A: first fluid
G: second fluid

## Claims

1. A plate-type heat exchanger, comprising:
a heat transfer assembly (30) which includes a plurality of heat transfer shells (20) stacked in multiple layers, wherein each of the heat transfer shells (20) include a pair of heat conduction plates (10), wherein
each of the heat conduction plates (10) has a pair of flange portions (16) bent at both side edges, **characterised in that** each of the heat conduction plates being bent at a bending portion (13) to form a first heat transfer portion (11) and a second heat transfer portion (12) arranged in parallel to face each other;
wherein the heat transfer shell (20) includes a first passage (S1), through which a first fluid (A) passes, formed by welding the end of the first heat transfer portion (11) of one of the pair of heat conduction plates (10) and the end of the second heat transfer portion (12) of the other heat conduction plate (10) in contact with each other and by welding the end of the second heat transfer portion (12) of the one heat conduction plate (10) and the end of the first heat transfer portion (11) of the other heat conduction plate (10) in contact with each other;
wherein the plurality of heat transfer shells (20) are stacked in multiple layers by welding both side flange portions (16) of the heat conduction plate (10) provided in the heat transfer shell (20) and both side flange portions (16) of the other heat conduction plate (10) provided in the other heat transfer shell (20), whereby a second passage (S2) through which a second fluid (G) passes is formed between the adjacent heat transfer shells (20) to intersect the first passage (S1); and
wherein heat exchange occurs between the first fluid (A) passing through the first passage (S1) and the second fluid (G) passing through the second passage (S2) without physical contact.

2. The plate-type heat exchanger according to claim 1, wherein the bending portion (13) includes a first bending portion (13a) having an arc-shaped cross-section, which connects the first heat transfer portion (11) and the second heat transfer portion (12) to each other, and a second bending portion (13b) having a plate shape, which connects the flange portions (16) formed at both side edges of the first heat transfer portion (11) and the other flange portions (16) formed at both side edge of the second heat transfer portion (12).

3. The plate-type heat exchanger according to claim 1, wherein the heat transfer shell (20) includes: a pair of heat conduction plates (10) in which the heat transfer area of the first heat transfer portion (11) is different from that of the second heat transfer portion (12); and
a plurality of spacing bars (17) that maintain a constant gap formed between the first and second heat transfer portions (11, 12) having different heat transfer areas and facing each other.

4. The plate-type heat exchanger according to claim 3, wherein the plurality of spacing bars (17, 18) include a first spacing bar (17) in which one side thereof is welded and connected to a joint area where the respective ends of the first and second heat transfer portions (11, 12) having different heat transfer areas are welded and connected in contact with each other, and the other side is welded and connected to a heat transfer portion (11, 12) corresponding to the joint area; and a second spacing bar (18) in which both sides thereof are welded and connected in contact with the heat transfer portions (11, 12) facing each other.

5. The plate-type heat exchanger according to claim 1, wherein the heat transfer shell (20) includes: a pair of heat conduction plates (10) in which the heat transfer area of the first heat transfer portion (11) is the same as that of the second heat transfer portion (12); and
a plurality of spacing bars (17, 18) that maintain a constant gap formed between the first and second heat transfer portions (11, 12) having the same heat transfer areas and facing each other.

6. The plate-type heat exchanger according to claim 5, wherein the plurality of spacing bars (17, 18) include a first spacing bar (17) in which both sides thereof are welded and connected to both sides of a joint area where the respective ends of the first and second heat transfer portions (11, 12) having the same heat transfer area are welded and connected in contact with each other; and a second spacing bar (18) in which both sides thereof are welded and connected in contact with the first and second heat transfer portions (11, 12) facing each other.

7. The plate-type heat exchanger according to claim 1, wherein the heat exchanger includes a plurality of vertical frames (31) located at each corner of the heat transfer assembly (30), an upper frame (32) fixed to each upper end of the plurality of vertical frames (31) so that its lower surface is in contact with the uppermost heat transfer shell (20) among the plurality of stacked heat transfer shells (20), a lower frame (33) fixed to each lower end of the plurality of vertical frames (31) so that its upper surface is in contact with the lowest heat transfer shell (20) among the plurality of stacked heat transfer shells (20), and a plurality of stopper bars (35) that are fixed to one side of each of the plurality of vertical frames (31) corresponding to the flange portion (16) of the heat conduction plate (10) to come into contact with the end of the flange portion (16).

8. The plate-type heat exchanger according to claim 7, wherein the heat exchanger includes at least one sealing material (34) which is interposed between each other side of the plurality of vertical frames (31) corresponding to the second bending portion (13b) formed at both ends of the bending portion (13), and the second bending portion (13b) formed in a flat plate shape.

9. A method of manufacturing a plate-type heat exchanger, the method including the steps of:
providing a square plate-shaped plate (P);
preparing a heat conduction plate (10) by first bending flange portions (16) at both side edges of the plate and secondarily bending the heat conduction plate at a bending portion (13) to form a first heat transfer portion (11) and a second heat transfer portion (12) so that they face each other and are parallel;
forming a heat transfer shell (20) having a first passage (S1), through which a first fluid (A) passes, by welding and connecting an end of the first heat transfer portion (11) of the heat conduction plate (10) and an end of the second heat transfer portion (12) of another heat conduction plate (10) in contact with each other, and by welding and connecting an end of the second heat transfer portion (12) of the heat conduction plate (10) and an end of the first heat transfer portion (11) of the other heat conduction plate (10) in contact with each other; and
forming a heat transfer assembly (30) having a second passage (S2), through which a second fluid (G) passes, by stacking a plurality of heat transfer shells (20) in multiple layers so that both side flange portions (16) of the heat conduction plate (10) provided in the heat transfer shell (10) and both side flange portions (16) of another heat conduction plate (10) provided in another heat transfer shell (20) are in contact with each other, whereby the second passage (S2) is formed between the adjacent heat transfer shells (20) to intersect the first passage (S1);
wherein heat exchange occurs between the first fluid (A) passing through the first passage (S1) and the second fluid (G) passing through the second passage (S2) without physical contact.

10. The method of manufacturing a plate-type heat exchanger according to claim 9, wherein in the step of preparing the heat conduction plate (10),
a mold is used, wherein the mold includes a lower mold body (40) including a first lower mold (41) and a pair of second lower molds (42) each having a bottom surface respectively disposed at both sides of the first lower mold (41), and an upper mold body (50) including a first upper mold (51) and a pair of second upper molds (52) respectively disposed at both sides of the first upper mold (51);
when the upper mold body (50) is lowered directly downward by an actuator to pressurize the plate and then return upward in a state where the plate having the flange portions (16) formed at both side edges by first bending is placed on the first and second lower molds (41, 42) of the lower mold body (40), the first and second lower molds (41, 42) of the lower mold body (40) can be joined to the first and second upper molds (52, 52) of the upper mold body (50) with the plate between them and secondarily bend the plate to form the bending portion (13).

11. The method of manufacturing a plate-type heat exchanger according to claim 10, wherein the first lower mold (41) includes a first concave portion with a bottom surface recessed downward, the second lower mold (42) includes a second concave portion with a flat bottom surface; and
the first upper mold (51) includes a first convex portion whose lower end corresponding to the first concave portion protrudes convexly downward, and the second upper mold (52) includes a second convex portion whose lower end corresponding to the second concave portion protrudes flatly.

12. The method of manufacturing a plate-type heat exchanger according to claim 11, wherein a first bending portion (13a) having an arc-shaped cross-section is bent and formed by the first concave portion and the first convex portion, while a second bending portion (13b) having a plate shape is bent and formed by the second concave portion and the second convex portion, thereby bending and forming the bending portion (13) in which the second bending portion (13b) is continuously formed at both sides of the first bending portion (13a).

13. The method of manufacturing a plate-type heat exchanger according to claim 9, wherein in the step of forming the heat transfer shell (20),
the heat transfer shell (20) includes a pair of heat conduction plates (10) in which the heat transfer area of the first heat transfer portion (11) is different from that of the second heat transfer portion (12),
one side of a first spacing bar (17) is welded and connected to a joint area where the respective ends of the first and second heat transfer portions (11, 12) having different heat transfer areas are welded and connected in contact with each other; the other side of the first spacing bar (17) is welded and connected to a relatively wide heat transfer portion; and both sides of a second spacing bar (18) are be welded and connected in contact with the heat transfer portions (11, 12) facing each other.

14. The method of manufacturing a plate-type heat exchanger according to claim 9, wherein in the step of forming the heat transfer shell (20),
the heat transfer shell (20) includes a pair of heat conduction plates (10) in which the heat transfer area of the first heat transfer portion (11) is the same as that of the second heat transfer portion (12),
both sides of a first spacing bar (17) are welded and connected to both side joint areas where the respective ends of the first and second heat transfer portions (11, 12) having the same heat transfer areas are welded and connected in contact with each other; and both sides of a second spacing bar (18) are welded and connected in contact with the heat transfer portions (11, 12) facing each other.

## Patentansprüche

1. Plattenwärmetauscher, umfassend:
eine Wärmeübertragungsanordnung (30), die eine Vielzahl von Wärmeübertragungshüllen (20) beinhaltet, die in mehreren Schichten gestapelt sind, wobei jede der Wärmeübertragungshüllen (20) ein Paar Wärmeleitplatten (10) beinhaltet,
wobei jede der Wärmeleitplatten (10) ein Paar Flanschabschnitte (16) aufweist, die an beiden Seitenkanten gebogen sind, **dadurch gekennzeichnet, dass** jede der Wärmeleitplatten an einem Biegeabschnitt (13) gebogen ist, um einen ersten Wärmeübertragungsabschnitt (11) und einen zweiten Wärmeübertragungsabschnitt (12) zu bilden, die parallel zueinander eingerichtet sind, um einander zugewandt zu sein;
wobei die Wärmeübertragungshülle (20) einen ersten Durchgang (S1) beinhaltet, durch den ein erstes Fluid (A) hindurchläuft, der durch Schweißen des Endes des ersten Wärmeübertragungsabschnitts (11) von einer aus dem Paar Wärmeleitplatten (10) und des Endes des zweiten Wärmeübertragungsabschnitts (12) der anderen Wärmeleitplatte (10) in Kontakt miteinander und durch Schweißen des Endes des zweiten Wärmeübertragungsabschnitts (12) der einen Wärmeleitplatte (10) und des Endes des ersten Wärmeübertragungsabschnitts (11) der anderen Wärmeleitplatte (10) in Kontakt miteinander gebildet wird;
wobei die Vielzahl von Wärmeübertragungshüllen (20) durch Schweißen beider Seitenflanschabschnitte (16) der Wärmeleitplatte (10), die in der Wärmeübertragungshülle (20) bereitgestellt ist, und beider Seitenflanschabschnitte (16) der anderen Wärmeleitplatte (10), die in der anderen Wärmeübertragungshülle (20) bereitgestellt ist, in mehreren Schichten gestapelt ist, wodurch ein zweiter Durchgang (S2), durch den ein zweites Fluid (G) hindurchläuft, zwischen den benachbarten Wärmeübertragungshüllen (20) gebildet ist, um den ersten Durchgang (S1) zu schneiden; und
wobei ein Wärmeaustausch zwischen dem ersten Fluid (A), das durch den ersten Durchgang (S1) hindurchläuft, und dem zweiten Fluid (G), das durch den zweiten Durchgang (S2) hindurchläuft, ohne physischen Kontakt stattfindet.

2. Plattenwärmetauscher nach Anspruch 1, wobei der Biegeabschnitt (13) einen ersten Biegeabschnitt (13a) mit einem bogenförmigen Querschnitt, der den ersten Wärmeübertragungsabschnitt (11) und den zweiten Wärmeübertragungsabschnitt (12) miteinander verbindet, und einen zweiten Biegeabschnitt (13b) mit einer Plattenform beinhaltet, der die Flanschabschnitte (16), die an beiden Seitenkanten des ersten Wärmeübertragungsabschnitts (11) ausgebildet sind, und die anderen Flanschabschnitte (16), die an beiden Seitenkanten des zweiten Wärmeübertragungsabschnitts (12) ausgebildet sind, verbindet.

3. Plattenwärmetauscher nach Anspruch 1, wobei die Wärmeübertragungshülle (20) Folgendes beinhaltet: ein Paar Wärmeleitplatten (10), in denen sich der Wärmeübertragungsbereich des ersten Wärmeübertragungsabschnitts (11) von dem des zweiten Wärmeübertragungsabschnitts (12) unterscheidet; und
eine Vielzahl von Abstandsstäben (17), die einen konstanten Spalt aufrechterhalten, der zwischen dem ersten und zweiten Wärmeübertragungsabschnitt (11, 12) ausgebildet ist, die unterschiedliche Wärmeübertragungsflächen aufweisen und einander zugewandt sind.

4. Plattenwärmetauscher nach Anspruch 3, wobei die Vielzahl von Abstandsstäben (17, 18) einen ersten Abstandsstab (17), in dem eine Seite davon mit einem Verbindungsbereich verschweißt und verbunden ist, in dem die jeweiligen Enden des ersten und des zweiten Wärmeübertragungsabschnitts (11, 12), die unterschiedliche Wärmeübertragungsbereiche aufweisen, in Kontakt miteinander verschweißt und verbunden sind, und die andere Seite mit einem Wärmeübertragungsabschnitt (11, 12) verschweißt und verbunden ist, der dem Verbindungsbereich entspricht; und einen zweiten Abstandsstab (18), in dem beide Seiten davon in Kontakt mit den Wärmeübertragungsabschnitten (11, 12), die einander zugewandt sind, verschweißt und verbunden sind, beinhaltet.

5. Plattenwärmetauscher nach Anspruch 1, wobei die Wärmeübertragungshülle (20) Folgendes beinhaltet: ein Paar Wärmeleitplatten (10), in denen der Wärmeübertragungsbereich des ersten Wärmeübertragungsabschnitts (11) derselbe ist wie der des zweiten Wärmeübertragungsabschnitts (12); und
eine Vielzahl von Abstandsstäben (17, 18), die einen konstanten Spalt aufrechterhalten, der zwischen dem ersten und dem zweiten Wärmeübertragungsabschnitt (11, 12) ausgebildet ist, die die gleichen Wärmeübertragungsbereiche aufweisen und einander zugewandt sind.

6. Plattenwärmetauscher nach Anspruch 5, wobei die Vielzahl von Abstandsstäben (17, 18) einen ersten Abstandsstab (17), in dem beide Seiten davon mit beiden Seiten eines Verbindungsbereichs verschweißt und verbunden sind, in dem die jeweiligen Enden des ersten und des zweiten Wärmeübertragungsabschnitts (11, 12), die den gleichen Wärmeübertragungsbereich aufweisen, in Kontakt miteinander verschweißt und verbunden sind; und einen zweiten Abstandsstab (18), in dem beide Seiten davon in Kontakt mit dem ersten und dem zweiten Wärmeübertragungsabschnitt (11, 12), die einander zugewandt sind, verschweißt und verbunden sind, beinhaltet.

7. Plattenwärmetauscher nach Anspruch 1, wobei der Wärmetauscher eine Vielzahl von vertikalen Rahmen (31), die sich an jeder Ecke der Wärmeübertragungsanordnung (30) befinden, einen oberen Rahmen (32), der an jedem oberen Ende der Vielzahl von vertikalen Rahmen (31) befestigt ist, sodass sich seine untere Oberfläche in Kontakt mit der obersten Wärmeübertragungshülle (20) unter der Vielzahl von gestapelten Wärmeübertragungshüllen (20) befindet, einen unteren Rahmen (33), der an jedem unteren Ende der Vielzahl von vertikalen Rahmen (31) befestigt ist, sodass sich seine obere Oberfläche in Kontakt mit der untersten Wärmübertragungshülle (20) unter der Vielzahl von gestapelten Wärmeübertragungshüllen (20) befindet, und eine Vielzahl von Anschlagstäben (35) beinhaltet, die an einer Seite von jedem der Vielzahl von vertikalen Rahmen (31), die dem Flanschabschnitt (16) der Wärmeleitplatte (10) entsprechen, um mit dem Ende des Flanschabschnitts (16) in Kontakt zu kommen, befestigt sind.

8. Plattenwärmetauscher nach Anspruch 7, wobei der Wärmetauscher mindestens ein Abdichtungsmaterial (34) beinhaltet, das zwischen jeder anderen Seite der Vielzahl von vertikalen Rahmen (31), die dem zweiten Biegeabschnitt (13b), der an beiden Enden des Biegeabschnitts (13) ausgebildet ist, entspricht, und dem zweiten Biegeabschnitt (13b), der in einer flachen Plattenform ausgebildet ist, angeordnet ist.

9. Verfahren zur Herstellung eines Plattenwärmetauschers, wobei das Verfahren die folgenden Schritte beinhaltet:
Bereitstellen einer viereckigen plattenförmigen Platte (P);
Fertigen einer Wärmeleitplatte (10) durch erstes Biegen von Flanschabschnitten (16) an beiden Seitenkanten der Platte und anschließend Biegen der Wärmeleitplatte an einem Biegeabschnitt (13), um einen ersten Wärmeübertragungsabschnitt (11) und einen zweiten Wärmeübertragungsabschnitt (12) zu bilden, sodass sie einander zugewandt und parallel sind;
Bilden einer Wärmeübertragungshülle (20) mit einem ersten Durchgang (S1), durch den ein erstes Fluid (A) hindurchläuft, durch Schweißen und Verbinden eines Endes des ersten Wärmeübertragungsabschnitts (11) der Wärmeleitplatte (10) und eines Endes des zweiten Wärmeübertragungsabschnitts (12) einer anderen Wärmeleitplatte (10) in Kontakt miteinander und durch Schweißen und Verbinden eines Endes des zweiten Wärmeübertragungsabschnitts (12) der Wärmeleitplatte (10) und eines Endes des ersten Wärmeübertragungsabschnitts (11) der anderen Wärmeleitplatte (10) in Kontakt miteinander; und
Bilden einer Wärmeübertragungsanordnung (30) mit einem zweiten Durchgang (S2), durch den ein zweites Fluid (G) hindurchläuft, durch Stapeln einer Vielzahl von Wärmeübertragungshüllen (20) in mehreren Schichten, sodass beide Seitenflanschabschnitte (16) der Wärmeleitplatte (10), die in der Wärmeübertragungshülle (10) bereitgestellt ist, und beide Seitenflanschabschnitte (16) einer anderen Wärmeleitplatte (10), die in einer anderen Wärmeübertragungshülle (20) bereitgestellt ist, in Kontakt miteinanander stehen, wodurch der zweite Durchgang (S2) zwischen den benachbarten Wärmeübertragungshüllen (20) ausgebildet ist, um den ersten Durchgang (S1) zu schneiden;
wobei ein Wärmeaustausch zwischen dem ersten Fluid (A), das durch den ersten Durchgang (S1) hindurchläuft, und dem zweiten Fluid (G), das durch den zweiten Durchgang (S2) hindurchläuft, ohne physischen Kontakt stattfindet.

10. Verfahren zur Herstellung eines Plattenwärmetauschers nach Anspruch 9, wobei in dem Schritt des Fertigens der Wärmeleitplatte (10)
eine Form verwendet wird, wobei die Form einen unteren Formkörper (40), der eine erste untere Form (41) und ein Paar zweiter unterer Formen (42), die jeweils eine untere Oberfläche aufweisen und jeweils an beiden Seiten der ersten unteren Form (41) angeordnet sind, beinhaltet, und einen oberen Formkörper (50) beinhaltet, der eine erste obere Form (51) und ein Paar zweiter oberer Formen (52), die jeweils an beiden Seiten der ersten oberen Form (51) angeordnet sind, beinhaltet;
wenn der obere Formkörper (50) direkt nach unten durch einen Aktor abgesenkt wird, um die Platte mit Druck zu beaufschlagen und dann nach oben in einem Zustand zurückzukehren, in dem die Platte, die die an beiden Seitenkanten durch erstes Biegen ausgebildeten Flanschabschnitte (16) aufweist, auf der ersten und der zweiten unteren Form (41, 42) des unteren Formkörpers (40) platziert wird, die erste und die zweite untere Form (41, 42) des unteren Formkörpers (40) mit der ersten und der zweiten oberen Form (52, 52) des oberen Formkörpers (50) mit der Platte zwischen ihnen verbunden werden und anschließend die Platte biegen können, um den Biegeabschnitt (13) zu bilden.

11. Verfahren zur Herstellung eines Plattenwärmetauschers nach Anspruch 10, wobei die erste untere Form (41) einen ersten konkaven Abschnitt mit einer unteren, nach unten vertieften Oberfläche beinhaltet, wobei die zweite untere Form (42) einen zweiten konkaven Abschnitt mit einer flachen unteren Oberfläche beinhaltet; und
die erste obere Form (51) einen ersten konvexen Abschnitt beinhaltet, dessen unteres Ende, der dem ersten konkaven Abschnitt entspricht, konvex nach unten vorsteht, und wobei die zweite obere Form (52) einen zweiten konvexen Abschnitt beinhaltet, dessen unteres Ende, der dem zweiten konkaven Abschnitt entspricht, flach vorsteht.

12. Verfahren zur Herstellung eines Plattenwärmetauschers nach Anspruch 11, wobei ein erster Biegeabschnitt (13a) mit einem bogenförmigen Querschnitt durch den ersten konkaven Abschnitt und den ersten konvexen Abschnitt gebogen und ausgebildet wird, während ein zweiter Biegeabschnitt (13b) mit einer Plattenform durch den zweiten konkaven Abschnitt und den zweiten konvexen Abschnitt gebogen und ausgebildet wird, wodurch der Biegeabschnitt (13), in dem der zweite Biegeabschnitt (13b) kontinuierlich an beiden Seiten des ersten Biegeabschnitts (13a) ausgebildet wird, gebogen und ausgebildet wird.

13. Verfahren zur Herstellung eines Plattenwärmetauschers nach Anspruch 9, wobei in dem Schritt des Ausbildens der Wärmeübertragungshülle (20)
die Wärmeübertragungshülle (20) ein Paar Wärmeleitplatten (10) beinhaltet, in denen sich der Wärmeübertragungsbereich des ersten Wärmeübertragungsabschnitts (11) von dem des zweiten Wärmeübertragungsabschnitts (12) unterscheidet,
eine Seite eines ersten Abstandsstabs (17) mit einem Verbindungsbereich verschweißt und verbunden wird, in dem die jeweiligen Enden des ersten und des zweiten Wärmeübertragungsabschnitts (11, 12), die unterschiedliche Wärmeübertragungsbereiche aufweisen, in Kontakt miteinander verschweißt und verbunden werden; die andere Seite des ersten Abstandsstabs (17) mit einem relativ breiten Wärmeübertragungsabschnitt verschweißt und verbunden wird; und beide Seiten eines zweiten Abstandsstabs (18) in Kontakt mit den Wärmeübertragungsabschnitten (11, 12), die einander zugewandt sind, verschweißt und verbunden werden.

14. Verfahren zur Herstellung eines Plattenwärmetauschers nach Anspruch 9, wobei in dem Schritt des Ausbildens der Wärmeübertragungshülle (20)
die Wärmeübertragungshülle (20) ein Paar Wärmeleitplatten (10) beinhaltet, in denen der Wärmeübertragungsbereich des ersten Wärmeübertragungsabschnitts (11) derselbe ist wie der des zweiten Wärmeübertragungsabschnitts (12),
beide Seiten des ersten Abstandsstabs (17) mit beiden Seitenverbindungsbereichen verschweißt und verbunden werden, in denen die jeweiligen Enden des ersten und des zweiten Wärmeübertragungsabschnitts (11, 12), die die gleichen Wärmeübertragungsbereiche aufweisen, in Kontakt miteinander verschweißt und verbunden werden; und beide Seiten eines zweiten Abstandsstabs (18) in Kontakt mit den Wärmeübertragungsabschnitten (11, 12), die einander zugewandt sind, verschweißt und verbunden werden.

## Revendications

1. Échangeur de chaleur à plaques, comprenant :
un ensemble de transfert de chaleur (30) qui comprend une pluralité de coques de transfert de chaleur (20) empilées en plusieurs couches, dans lequel chacune des coques de transfert de chaleur (20) comprend une paire de plaques de conduction de chaleur (10), dans lequel
chacune des plaques de conduction de chaleur (10) présente une paire de parties de bride (16) pliées au niveau des deux bords latéraux, **caractérisé en ce que**
chacune des plaques de conduction de chaleur est pliée au niveau d'une partie de pliage (13) pour former une première partie de transfert de chaleur (11) et une seconde partie de transfert de chaleur (12) agencées en parallèle pour se faire face ;
dans lequel la coque de transfert de chaleur (20) comprend un premier passage (S1), à travers lequel passe un premier fluide (A), formé en soudant l'extrémité de la première partie de transfert de chaleur (11) de l'une de la paire de plaques de conduction de chaleur (10) et l'extrémité de la seconde partie de transfert de chaleur (12) de l'autre plaque de conduction de chaleur (10) en contact l'une avec l'autre et en soudant l'extrémité de la seconde partie de transfert de chaleur (12) de l'une première plaque de conduction de chaleur (10) et l'extrémité de la première partie de transfert de chaleur (11) de l'autre plaque de conduction de chaleur (10) en contact l'une avec l'autre ;
dans lequel la pluralité de coques de transfert de chaleur (20) sont empilées en plusieurs couches en soudant les deux parties de bride latérale (16) de la plaque de conduction de chaleur (10) prévue dans la coque de transfert de chaleur (20) et les deux parties de bride latérale (16) de l'autre plaque de conduction de chaleur (10) prévue dans l'autre coque de transfert de chaleur (20), moyennant quoi un second passage (S2) à travers lequel passe un second fluide (G) est formé entre les coques de transfert de chaleur (20) adjacentes pour croiser le premier passage (S1) ; et
dans lequel un échange de chaleur se produit entre le premier fluide (A) passant à travers le premier passage (S1) et le second fluide (G) passant à travers le second passage (S2) sans contact physique.

2. Échangeur de chaleur à plaques selon la revendication 1, dans lequel la partie de pliage (13) comprend une première partie de pliage (13a) présentant une section transversale en forme d'arc, qui relie la première partie de transfert de chaleur (11) et la seconde partie de transfert de chaleur (12) l'une à l'autre, et une seconde partie de pliage (13b) présentant une forme de plaque, qui relie les parties de bride (16) formées au niveau des deux bords latéraux de la première partie de transfert de chaleur (11) et les autres parties de bride (16) formées au niveau des deux bords latéraux de la seconde partie de transfert de chaleur (12).

3. Échangeur de chaleur à plaques selon la revendication 1, dans lequel la coque de transfert de chaleur (20) comprend : une paire de plaques de conduction de chaleur (10) où la zone de transfert de chaleur de la première partie de transfert de chaleur (11) est différente de celle de la seconde partie de transfert de chaleur (12) ; et
une pluralité de barres d'espacement (17) qui maintiennent un espace constant formé entre les première et seconde parties de transfert de chaleur (11, 12) présentant des zones de transfert de chaleur différentes et se faisant face.

4. Échangeur de chaleur à plaques selon la revendication 3, dans lequel la pluralité de barres d'espacement (17, 18) comprend une première barre d'espacement (17) dont un côté est soudé et relié à une zone de jonction où les extrémités respectives des première et seconde parties de transfert de chaleur (11, 12) présentant des zones de transfert de chaleur différentes sont soudées et reliées en contact l'une avec l'autre, et l'autre côté est soudé et relié à une partie de transfert de chaleur (11, 12) correspondant à la zone de jonction ; et une seconde barre d'espacement (18) dont les deux côtés sont soudés et reliés en contact avec les parties de transfert de chaleur (11, 12) se faisant face.

5. Échangeur de chaleur à plaques selon la revendication 1, dans lequel la coque de transfert de chaleur (20) comprend : une paire de plaques de conduction de chaleur (10) où la zone de transfert de chaleur de la première partie de transfert de chaleur (11) est identique à celle de la seconde partie de transfert de chaleur (12) ; et
une pluralité de barres d'espacement (17, 18) qui maintiennent un espace constant formé entre les première et seconde parties de transfert de chaleur (11, 12) présentant des zones de transfert de chaleur identiques et se faisant face.

6. Échangeur de chaleur à plaques selon la revendication 5, dans lequel la pluralité de barres d'espacement (17, 18) comprend une première barre d'espacement (17) dont les deux côtés sont soudés et reliés aux deux côtés d'une zone de jonction où les extrémités respectives des première et seconde parties de transfert de chaleur (11, 12) présentant une zone de transfert de chaleur identique sont soudées et reliées en contact l'une avec l'autre ; et une seconde barre d'espacement (18) dont les deux côtés sont soudés et reliés en contact avec les première et seconde parties de transfert de chaleur (11, 12) se faisant face.

7. Échangeur de chaleur à plaques selon la revendication 1, dans lequel l'échangeur de chaleur comprend une pluralité de cadres verticaux (31) situés au niveau de chaque coin de l'ensemble de transfert de chaleur (30), un cadre supérieur (32) fixé à chaque extrémité supérieure de la pluralité de cadres verticaux (31) de sorte que sa surface inférieure est en contact avec la coque de transfert de chaleur (20) la plus supérieure parmi la pluralité de coques de transfert de chaleur (20) empilées, un cadre inférieur (33) fixé à chaque extrémité inférieure de la pluralité de cadres verticaux (31) de sorte que sa surface supérieure est en contact avec la coque de transfert de chaleur (20) la plus inférieure parmi la pluralité de coques de transfert de chaleur (20) empilées, et une pluralité de barres de butée (35) qui sont fixées à un côté de chacun de la pluralité de cadres verticaux (31) correspondant à la partie de bride (16) de la plaque de conduction de chaleur (10) pour venir en contact avec l'extrémité de la partie de bride (16).

8. Échangeur de chaleur à plaques selon la revendication 7, dans lequel l'échangeur de chaleur comprend au moins un matériau d'étanchéité (34) qui est interposé entre chaque autre côté de la pluralité de cadres verticaux (31) correspondant à la seconde partie de pliage (13b) formée aux deux extrémités de la partie de pliage (13), et la seconde partie de pliage (13b) formée en forme de plaque plate.

9. Procédé de fabrication d'un échangeur de chaleur à plaques, le procédé comprenant les étapes de :
fourniture d'une plaque (P) en forme de plaque carrée ;
préparation d'une plaque de conduction de chaleur (10) en pliant premièrement des parties de bride (16) au niveau des deux bords latéraux de la plaque et en pliant secondairement la plaque de conduction de chaleur au niveau d'une partie de pliage (13) pour former une première partie de transfert de chaleur (11) et une seconde partie de transfert de chaleur (12) de sorte qu'elles se font face et sont parallèles ;
formation d'une coque de transfert de chaleur (20) présentant un premier passage (S1), à travers lequel passe un premier fluide (A), en soudant et en reliant une extrémité de la première partie de transfert de chaleur (11) de la plaque de conduction de chaleur (10) et une extrémité de la seconde partie de transfert de chaleur (12) d'une autre plaque de conduction de chaleur (10) en contact l'une avec l'autre, et en soudant et en reliant une extrémité de la seconde partie de transfert de chaleur (12) de la plaque de conduction de chaleur (10) et une extrémité de la première partie de transfert de chaleur (11) de l'autre plaque de conduction de chaleur (10) en contact l'une avec l'autre ; et
formation d'un ensemble de transfert de chaleur (30) présentant un second passage (S2), à travers lequel passe un second fluide (G), en empilant une pluralité de coques de transfert de chaleur (20) en plusieurs couches de sorte que les deux parties de bride latérale (16) de la plaque de conduction de chaleur (10) prévue dans la coque de transfert de chaleur (10) et les deux parties de bride latérale (16) d'une autre plaque de conduction de chaleur (10) prévue dans une autre coque de transfert de chaleur (20) sont en contact les unes avec les autres, moyennant quoi le second passage (S2) est formé entre les coques de transfert de chaleur (20) adjacentes pour croiser le premier passage (S1) ;
dans lequel un échange de chaleur se produit entre le premier fluide (A) passant à travers le premier passage (S1) et le second fluide (G) passant à travers le second passage (S2) sans contact physique.

10. Procédé de fabrication d'un échangeur de chaleur à plaques selon la revendication 9, dans lequel, à l'étape de préparation de la plaque de conduction de chaleur (10),
un moule est utilisé, dans lequel le moule comprend un corps de moule inférieur (40) comprenant un premier moule inférieur (41) et une paire de seconds moules inférieurs (42) présentant chacun une surface de fond respectivement disposée des deux côtés du premier moule inférieur (41), et un corps de moule supérieur (50) comprenant un premier moule supérieur (51) et une paire de seconds moules supérieurs (52) respectivement disposés des deux côtés du premier moule supérieur (51) ;
lorsque le corps de moule supérieur (50) est abaissé directement vers le bas par un actionneur pour mettre sous pression la plaque, puis revenir vers le haut dans un état où la plaque présentant les parties de bride (16) formées au niveau des deux bords latéraux par premier pliage est placée sur les premier et second moules inférieurs (41, 42) du corps de moule inférieur (40), les premier et second moules inférieurs (41, 42) du corps de moule inférieur (40) peuvent être joints aux premier et second moules supérieurs (52, 52) du corps de moule supérieur (50) avec la plaque entre eux et secondairement plier la plaque pour former la partie de pliage (13).

11. Procédé de fabrication d'un échangeur de chaleur à plaques selon la revendication 10, dans lequel le premier moule inférieur (41) comprend une première partie concave avec une surface de fond évidée vers le bas, le second moule inférieur (42) comprend une seconde partie concave avec une surface de fond plate ; et
le premier moule supérieur (51) comprend une première partie convexe dont l'extrémité inférieure correspondant à la première partie concave fait saillie de manière convexe vers le bas, et le second moule supérieur (52) comprend une seconde partie convexe dont l'extrémité inférieure correspondant à la seconde partie concave fait saillie à plat.

12. Procédé de fabrication d'un échangeur de chaleur à plaques selon la revendication 11, dans lequel une première partie de pliage (13a) présentant une section transversale en forme d'arc est pliée et formée par la première partie concave et la première partie convexe, tandis qu'une seconde partie de pliage (13b) présentant une forme de plaque est pliée et formée par la seconde partie concave et la seconde partie convexe, pliant et formant ainsi la partie de pliage (13) où la seconde partie de pliage (13b) est formée en continu des deux côtés de la première partie de pliage (13a).

13. Procédé de fabrication d'un échangeur de chaleur à plaques selon la revendication 9, dans lequel, à l'étape de formation de la coque de transfert de chaleur (20),
la coque de transfert de chaleur (20) comprend une paire de plaques de conduction de chaleur (10) où la zone de transfert de chaleur de la première partie de transfert de chaleur (11) est différente de celle de la seconde partie de transfert de chaleur (12),
un côté d'une première barre d'espacement (17) est soudé et relié à une zone de jonction où les extrémités respectives des première et seconde parties de transfert de chaleur (11, 12) présentant des zones de transfert de chaleur différentes sont soudées et reliées en contact l'une avec l'autre ; l'autre côté de la première barre d'espacement (17) est soudé et relié à une partie de transfert de chaleur relativement large ; et les deux côtés d'une seconde barre d'espacement (18) sont soudés et reliés en contact avec les parties de transfert de chaleur (11, 12) se faisant face.

14. Procédé de fabrication d'un échangeur de chaleur à plaques selon la revendication 9, dans lequel, à l'étape de formation de la coque de transfert de chaleur (20),
la coque de transfert de chaleur (20) comprend une paire de plaques de conduction de chaleur (10) où la zone de transfert de chaleur de la première partie de transfert de chaleur (11) est identique à celle de la seconde partie de transfert de chaleur (12),
les deux côtés d'une première barre d'espacement (17) sont soudés et reliés aux deux zones de jonction latérales où les extrémités respectives des première et seconde parties de transfert de chaleur (11, 12) présentant des zones de transfert de chaleur identiques sont soudées et reliées en contact l'une avec l'autre ; et les deux côtés d'une seconde barre d'espacement (18) sont soudés et reliés en contact avec les parties de transfert de chaleur (11, 12) se faisant face.
